(19) Europäisches Patentamt
European Patent Office
Office européen des brevets

(11) Veröffentlichungsnummer: **0 040 582**
**B1**

(12) # EUROPÄISCHE PATENTSCHRIFT

(45) Veröffentlichungstag der Patentschrift: **20.03.85**

(51) Int. Cl.⁴: **C 09 B 29/42** // D06P1/18, D06P3/54

(21) Anmeldenummer: **81810179.2**

(22) Anmeldetag: **07.05.81**

(54) **Azoverbindungen.**

(30) Priorität: **13.05.80 CH 3733/80**

(43) Veröffentlichungstag der Anmeldung: **25.11.81 Patentblatt 81/47**

(45) Bekanntmachung des Hinweises auf die Patenterteilung: **20.03.85 Patentblatt 85/12**

(84) Benannte Vertragsstaaten: **CH DE FR GB IT LI**

(56) Entgegenhaltungen:
**FR - A - 2 076 138**
**GB - A - 1 274 944**
**US - A - 3 957 749**

**Die Akte enthält technische Angaben, die nach dem Eingang der Anmeldung eingereicht wurden und die *nicht in dieser Patentschrift enthalten sind.***

(73) Patentinhaber: **CIBA-GEIGY AG, Postfach, CH-4002 Basel (CH)**

(72) Erfinder: **Liechti, Hans Wilhelm, Dr., Brügglistrasse 7, CH-4104 Oberwil (CH)**

**EP 0 040 582 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Azoverbindungen der Benzol-azo-pyridon-Reihe, Verfahren zu deren Herstellung sowie deren Verwendung als Farbstoffe zum Färben und Bedrucken von Textilmaterialien welches mit Dispersionsfarbstoffen anfärbbar ist.

Die neuen Azoverbindungen entsprechen der Formel I

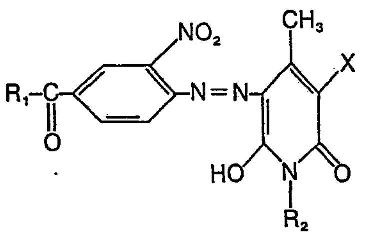

(I)

worin bedeuten:

$R_1$ einen gegebenenfalls substituierten Phenylrest,

X CN oder die $SO_2$-Alkyl($C_1$–$C_4$)-Gruppe, und

$R_2$ einen gegebenenfalls substituierten ($C_1$–$C_8$)-Alkylrest.

Handelt es sich bei $R_1$ um einen substituierten Phenylrest so kommen als Substituenten beispielsweise in Frage: Halogen wie Fluor, Chlor oder Brom; eine unverzweigte oder verzweigte $C_1$–$C_4$-Alkylgruppe wie die Methyl-, Äthyl-, n- und iso-Propyl- oder n-, sec- oder tert. Butylgruppe; eine unverzweigte oder verzweigte $C_1$–$C_4$-Alkoxygruppe wie die Methoxy-, Äthoxy-, n- oder iso-Propoxy- oder n- oder iso-Butoxygruppe und eine Aryloxygruppe wie die Phenoxygruppe worin der Phenylrest gegebenenfalls noch z.B. durch Alkyl ($C_1$–$C_4$), Halogen oder die Nitro-Gruppe substituiert sein kann. Die Substituenten im Phenylrest $R_1$ können ein- oder mehrmals vorhanden sein. In bevorzugten Azoverbindungen bedeutet $R_1$ einen unsubstituierten oder monosubstituierten Phenylrest; insbesondere einen durch Halogen, vor allem Chlor oder einen $C_1$–$C_4$-Alkyl- oder $C_1$–$C_4$-Alkoxyrest substituierten Phenylrest, wobei sich der Substituent vorzugsweise in p-Stellung zur –CO-Brücke befindet.

X in der Bedeutung einer $SO_2$-Alkyl($C_1$–$C_4$)-Gruppe stellt beispielsweise die $SO_2CH_3$, $SO_2C_2H_5$, $SO_2C_3H_7$(n- und iso) sowie die $SO_2C_4H_9$(n- und iso)-Gruppe dar. In bevorzugten Azoverbindungen der Formel I bedeutet X die CN-Gruppe.

Handelt es sich bei $R_2$ um eine unsubstituierte $C_1$–$C_8$-Alkylgruppe so kommen sowohl unverzweigte als auch verzweigte Alkylgruppen in Betracht; beispielsweise sind genannt die Methyl-, Äthyl-, n- und iso-Propyl-, n-, sec- und tert-Butyl-, n- und iso-Pentyl-, n- und iso-Hexyl, n- und iso-Heptyl sowie die n- und iso-Octylgruppe. Diese Alkylreste können erfindungsgemäss substituiert sein; als Substituenten kommen beispielsweise in Frage: $C_1$–$C_4$-Alkoxygruppen wie die Methoxy-, Äthoxy-, n- und iso-Propoxy- und n- und iso-Butoxygruppe welche ihrerseits noch weitersubstituiert sein können beispielsweise durch eine Phenoxygruppe; ferner Aryloxygruppen wie die Phenoxygruppe; dann Phenyl gegebenenfalls substituiert durch eine $C_1$–$C_4$-Alkylgruppe, Halogen oder durch die Nitrogruppe; dann OH; O.Acyl wie beispielsweise $OCOCH_3$ und $OCOC_2H_5$ sowie OCO.Aryl wie OCO.Phenyl worin der Phenylrest gegebenenfalls noch durch Halogen oder Nitro substituiert sein kann. In bevorzugten Azoverbindungen der Formel I bedeutet $R_2$ eine unsubstituierte, verzweigte oder unverzweigte Alkylgruppe ($C_1$–$C_8$), insbesondere die n-Butyl- oder die iso-Octylgruppe.

In einer bevorzugten Klasse der erfindungsgemässen Azoverbindungen der Formel I bedeuten $R_1$ die unsubstituierte Phenylgruppe oder die durch $CH_3$, Cl oder $OCH_3$ substituierte Phenylgruppe; X CN oder $SO_2CH_3$ vor allem CN und $R_2$ eine unverzweigte oder verzweigte $C_2$–$C_3$-Alkylgruppe welche substituiert ist durch Phenyl, OH, $OCH_3$, $OC_3H_7$ (n und iso), Phenoxy

$-OCH_2CH_2-O-$ 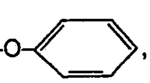, $OCOCH_3$ oder OCO– 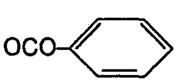

worin der Phenylrest gegebenenfalls ein- oder mehrmals durch Cl oder $NO_2$ substituiert sein kann und insbesondere eine unsubstituierte unverzweigte oder verzweigte $C_1$–$C_8$-Alkylgruppe.

Die neuen Azoverbindungen der Formel I können nach bekannter Art und Weise hergestellt werden beispielsweise derart, dass man ein Amin der Formel II

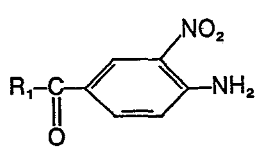

(II)

diazotiert und mit einer Kupplungskomponente der Formel III

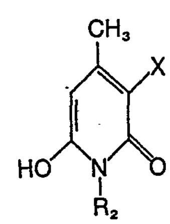

(III)

worin die Symbole $R_1$, X und $R_2$ die unter Formel I angegebene Bedeutung haben, kuppelt.

Die Diazotierungsreaktion und Kupplungsreaktion erfolgen auf bekannte Art, wie z.B. beschrieben in Ullmanns Encyklopädie der technischen Chemie, Bd. 5 (1954), Seite 783 ff.

Die Amine der Formel II (Diphenylketone) sind bekannt oder können nach bekannten Methoden hergestellt werden. Man verwendet insbesondere solche Amine der Formel II worin $R_1$ einen unsub-

stituierten oder monosubstituierten Phenylrest, vor allem einen durch Halogen, eine $C_1$–$C_4$-Alkylgruppe oder eine $C_1$–$C_4$-Alkoxygruppe substituierten Phenylrest darstellt.

Aus der grossen Vielzahl der einsetzbaren Amine sind beispielsweise genannt:
3-Nitro-4-amino-diphenylketon,
4'-Methyl-3-nitro-4-amino-diphenylketon,
4'-Chlor-3-nitro-4-amino-diphenylketon, und
4'-Methoxy-3-nitro-4-amino-diphenylketon.

Die Kupplungskomponenten der Formel III sind ebenfalls bekannt oder können nach bekannten Methoden gewonnen werden. Man verwendet insbesondere solche Kupplungskomponenten der Formel III worin X die CN-Gruppe bedeutet und $R_2$ eine unsubstituierte, verzweigte oder unverzweigte $C_1$–$C_8$-Alkylgruppe insbesondere die n-Butyl- oder die iso-Octylgruppe darstellt.

Um zu den bevorzugten Azoverbindungen zu gelangen geht man von Aminen der Formel II aus, worin $R_1$ die unsubstituierte Phenylgruppe oder die durch $CH_3$, Cl oder $OCH_3$ substituierte Phenylgruppe bedeutet, diazotiert diese Amine und kuppelt sie auf eine Kupplungskomponente der Formel III worin X die CN oder $SO_2CH_3$ vor allem CN und $R_2$ eine unverzweigte oder verzweigte $C_2$–$C_3$-Alkylgruppe welche substituiert ist durch Phenyl, OH, $OCH_3$, $OC_3H_7$ (n und iso), Phenoxy,

$-OCH_2CH_2-O-$ 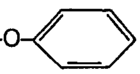, $OCOCH_3$ oder OCO- 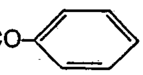

worin der Phenylrest gegebenenfalls ein- oder mehrmals durch Cl oder $NO_2$ substituiert sein kann und vor allem eine unverzweigte oder verzweigte $C_1$–$C_8$-Alkylgruppe bedeutet.

Aus der grossen Vielzahl der zum Einsatz kommenden Kupplungskomponenten der Formel III sind beispielsweise genannt:
1-n-Butyl-3-cyan-4-methyl-6-hydroxy-pyridon-(2),
1-Methyl-3-cyan-4-methyl-6-hydroxy-pyridon-(2),
1-Äthyl-3-cyan-4-methyl-6-hydroxy-pyridon-(2),
1-n-Propyl-3-cyan-4-methyl-6-hydroxy-pyridon-(2),
1-iso-Propyl-3-cyan-4-methyl-6-hydroxy-pyridon-(2),
1-n-Hexyl-3-cyan-4-methyl-6-hydroxy-pyridon-(2),
1-iso-Octyl-3-cyan-4-methyl-6-hydroxy-pyridon-(2),
1-ω-Methoxy-propyl-3-cyan-4-methyl-6-hydroxy-pyridon-(2),
1-Phenyläthyl-3-cyan-4-methyl-6-hydroxy-pyridon-(2),
1-ω-iso-Propoxy-propyl-3-cyan-4-methyl-6-hydroxy-pyridon-(2),
1-Phenoxyäthyl-3-cyan-4-methyl-6-hydroxy-pyridon-(2),
1-Phenoxy-äthoxy-propyl-3-cyan-4-methyl-6-hydroxy-pyridon-(2),
1-β-Hydroxyäthyl-3-cyan-4-methyl-6-hydroxy-pyridon-(2),
1-Methylcarbonyloxy-äthyl-3-cyan-4-methyl-6-hydroxy-pyridon-(2),
1-Phenylcarbonyloxy-äthyl-3-cyan-4-methyl-6-hydroxy-pyridon-(2),
1-(4'-Chlor)-phenylcarbonyloxyäthyl-3-cyan-4-methyl-6-hydroxy-pyridon-(2),
1-β-Hydroxypropyl-3-cyan-4-methyl-6-hydroxy-pyridon-(2),
1-(2',4'-Dichlor)-phenylcarbonyloxypropyl-3-cyan-4-methyl-6-hydroxy-pyridon-(2),
1-Äthyl-3-methylsufonyl-4-methyl-6-hydroxy-pyridon-(2), und
1-n-Butyl-3-methylsulfonyl-4-methyl-6-hydroxy-pyridon-(2).

Verwendung finden die erfindungsgemässen Azoverbindungen der Formel I vor allem als Farbstoffe zum Färben, Klotzen oder Bedrucken von Textilmaterialien welches mit Dispersionsfarbstoffen anfärbbar ist. Die Textilmaterialien, vor allem synthetischen Fasermaterialien aus linearen, aromatischen Polyestern, beispielsweise solchen aus Terephthalsäure und Glykolen, besonders Äthylenglykol oder Kondensationsprodukten aus Terephthalsäure und 1,4-Bis-(hydroxymethyl)-hexahydrobenzol, aus Polycarbonaten, zum Beispiel solchen aus α,α-Dimethyl-4,4'-dihydroxy-diphenylmethan und Phosgen, aus Estern der Cellulose, beispielsweise Cellulosetriacetat und auf Polyvinylchlorid-Basis, können dabei in den verschiedensten Verarbeitungsformen vorliegen wie z.B. als Fasern, Fäden oder Vliesen, Geweben oder Gewirken, insbesondere aber als Gewirke.

Die Farbstoffe werden dabei nach den bekannten Färbeverfahren appliziert, beispielsweise färbt man Polyestermaterialien im Ausziehverfahren aus wässerigen Dispersionen in Gegenwart von üblichen anionischen oder nicht-ionischen Dispergiermitteln und gegebenenfalls üblichen Quellmitteln (Carrier) bei Temperaturen zwischen 80 und 125 °C oder in Abwesenheit von Carrier unter Druck bei etwa 100 bis 140 °C (HT-Verfahren). Cellulose-2½-acetat färbt man vorzugsweise zwischen ungefähr 65 bis 85 °C und Cellulosetriacetat bei Temperaturen bis zu 115 °C. Die Farbstoffe eignen sich ferner zum Färben nach dem Thermosol-Verfahren. Sie färben gleichzeitig im Färbebad anwesende Wolle und Baumwolle nicht oder nur wenig an, (sehr gute Reserve) so dass sie gut zum Färben von Polyester/Wolle- und Polyester/Cellulosefaser-Mischgeweben verwendbar sind. Sie besitzen zudem gute Löslichkeit in vielen organischen Lösungsmitteln und können so zum Färben von Lacken, Ölen, Kunststoffen wie Polystyrol und Polyäthylen, in der Masse und von Fasern nach den üblichen Spinnfärbeprozessen dienen.

Es ist vorteilhaft die Farbstoffe vor ihrer Verwendung in Farbstoffpräparate überzuführen. Hierzu werden sie vermahlen, so dass ihre Teilchengrösse im Mittel zwischen 0,01 und 10 Mikron beträgt. Das Vermahlen kann in Gegenwart von Dispergiermitteln erfolgen. Beispielsweise wird

der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man, nach Zugabe von Wasser färben, klotzen oder bedrucken.

Beim Klotzen und Bedrucken wird man die üblichen Verdickungsmittel verwenden, z.B. modifizierte oder nicht-modifizierte natürliche Produkte, beispielsweise Alginate, Britishgummi, Gummi arabicum, Kristallgummi, Johannisbrotkernmehl, Tragant, Carboxymethylcellulose, Hydroxyäthylcellulose, Stärke oder synthetische Produkte beispielsweise Polyacrylamide oder Polyvinylalkohole.

Die neuen Azofarbstoffe der Formel I verleihen den genannten hydrophoben Materialien klare farbstarke, leuchtende, grünstichig gelbe Nuancen. Die Ausfärbungen weisen sehr gute Echtheiten, wie vor allem eine sehr gute Lichtechtheit und Sublimierechtheit, Thermofixier-, Plissier-, Chlor- und Nassechtheit wie Wasser-, Schweiss- und Waschechtheit auf und sind ferner gekennzeichnet durch eine gute pH-Stabilität, und zeigen kein «catalytic fading» sofern sie mit blauen Farbstoffen vermischt, appliziert werden.

Die folgenden Beispiele veranschaulichen die Erfindung. Temperaturen sind in Grad Celsius angegeben; Teile (T) bedeuten, sofern nichts anderes angegeben ist, Gewichtsteile.

Beispiel 1:

25,6 T 4′-Methyl-3-nitro-4-amino-diphenylketon werden in konzentrierter Schwefelsäure mit Nitrosylschwefelsäurelösung auf übliche Art diazotiert und auf Eis ausgetragen.

Die klare Diazolösung lässt man unter gutem Rühren bei Raumtemperatur zu einer Lösung von 20,6 T 1-n-Butyl-3-cyan-4-methyl-6-hydroxy-pyrid-2-on in Wasser zutropfen. Durch gleichzeitiges Zutropfen von 20%iger wässriger Natriumhydroxydlösung hält man den pH-Wert der Kupplungsmasse bei 4–5.

Die Kupplung ist sofort fertig und der neue Farbstoff der Formel

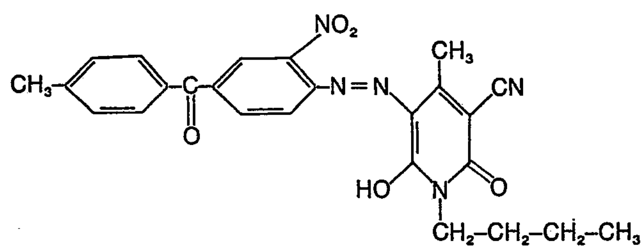

vollständig ausgefallen. Man erwärmt die Kupplungsmasse auf 60°, filtriert den Farbstoff ab und wäscht ihn auf dem Filter mit Wasser gut aus.

Nach dem Trocknen erhält man in ausgezeichneter Ausbeute den Farbstoff als gelbes Pulver, das Polyesterfasern und andere hydrophobe Textilien nach allen üblichen Verfahren in farbstarken grünstichig gelben Tönen mit sehr guter Licht- und Sublimierechtheit anfärbt.

Farbstoffe mit ebenso guten Echtheiten stellen die Verbindungen dar, die der folgenden allgemeinen Formel entsprechen, und die auf analoge Weise wie in Beispiel 1 beschrieben, hergestellt werden.

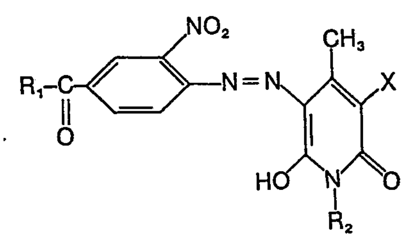

Sie färben hydrophobe Fasern wie Polyesterfasern alle in leuchtenden, grünstichig-gelben Tönen an.

| Beispiel | $R_1$ | $R_2$ | X |
|---|---|---|---|
| 2 | 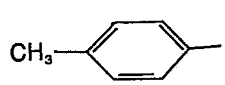 | $-CH_3$ | –CN |
| 3 | " | $-C_2H_5$ | –CN |
| 4 | " | $-CH_2-CH_2-CH_3$ | –CN |
| 5 | " | $-CH_2-CH_2-CH_2-CH_2-CH_2-CH_3$ | –CN |
| 6 | " | 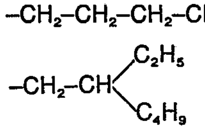 | –CN |
| 7 | " | 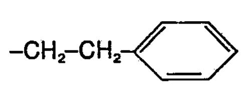 | –CN |

| Beispiel | $R_1$ | $R_2$ | X |
|---|---|---|---|
| 8 | 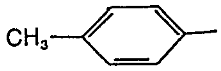 | $-CH_2-CH_2-CH_2-O-CH_3$ | $-CN$ |
| 9 | " | 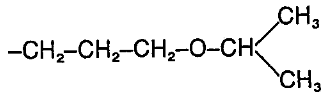 | $-CN$ |
| 10 | " | 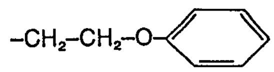 | $-CN$ |
| 11 | " | 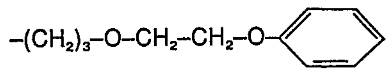 | $-CN$ |
| 12 | " | $-CH_2-CH_2-OH$ | $-CN$ |
| 13 | " | 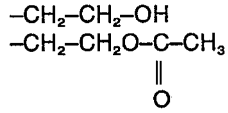 | $-CN$ |
| 14 | " | 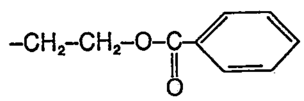 | $-CN$ |
| 15 | " | $-C_2H_5$ | $-SO_2CH_3$ |
| 16 | " | $-CH_2-CH_2-CH_2-CH_3$ | $-SO_2CH_3$ |
| 17 | " | $-CH_3$ | $-SO_2CH_3$ |
| 18 | " | $-CH_2-CH_3$ | $-SO_2CH_3$ |
| 19 | " | $-CH_2-CH_2-CH_3$ | $-SO_2CH_3$ |
| 20 | " | 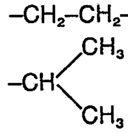 | $-SO_2CH_3$ |
| 21 | " | $-CH_2-CH_2-CH_2-CH_3$ | $-SO_2CH_3$ |
| 22 | " | 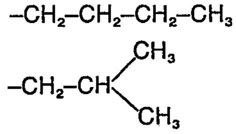 | $-SO_2CH_3$ |
| 23 | " | $-CH_2-CH_2-CH_2-CH_2-CH_2-CH_3$ | $-SO_2CH_3$ |
| 24 | " | 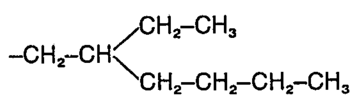 | $-SO_2CH_3$ |
| 25 | " | 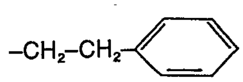 | $-SO_2CH_3$ |
| 26 | " | $-CH_2-CH_2-CH_2-OCH_3$ | $-SO_2CH_3$ |
| 27 | " | 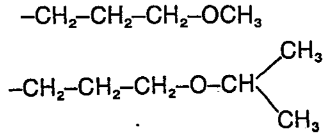 | $-SO_2CH_3$ |
| 28 | " | 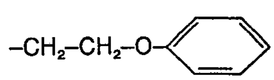 | $-SO_2CH_3$ |
| 29 | " | 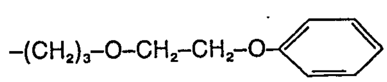 | $-SO_2CH_3$ |
| 30 | " | $-CH_2-CH_2-OH$ | $-SO_2CH_3$ |
| 31 | " | 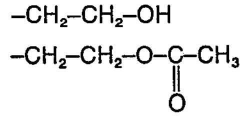 | $-SO_2CH_3$ |

| Beispiel | $R_1$ | $R_2$ | X |
|---|---|---|---|
| 32 | 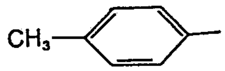 | 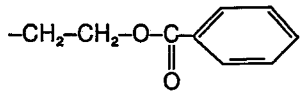 | $-SO_2CH_3$ |
| 33 | 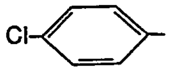 | 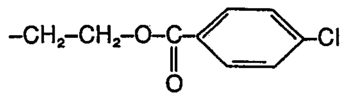 | $-CN$ |
| 34 | " | $-CH_2-CH_2-CH_2-OH$ | $-CN$ |
| 35 | " | 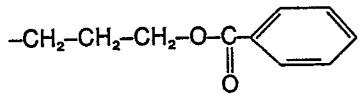 | $-CN$ |
| 36 | " | 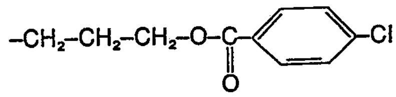 | $-CN$ |
| 37 | " | 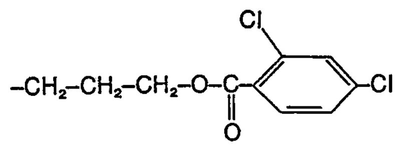 | $-CN$ |
| 38 | " | $-CH_2-CH_3$ | $-SO_2CH_3$ |
| 39 | " | $-CH_2-CH_2-CH_2-CH_3$ | $-SO_2CH_3$ |
| 40 | " | $-CH_3$ | $-SO_2CH_3$ |
| 41 | " | $-CH_2-CH_3$ | $-SO_2CH_3$ |
| 42 | " | $-CH_2-CH_2-CH_3$ | $-SO_2CH_3$ |
| 43 | " | $-CH_2-CH_2-CH_2-CH_3$ | $-SO_2CH_3$ |
| 44 | " | $-CH_2-CH_2-CH_2-CH_2-CH_2-CH_3$ | $-SO_2CH_3$ |
| 45 | " | 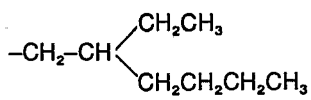 | $-SO_2CH_3$ |
| 46 | " | $-CH_2-CH_2-$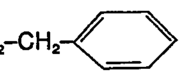 | $-SO_2CH_3$ |
| 47 | " | $-CH_2-CH_2-CH_2-O-CH_3$ | $-SO_2CH_3$ |
| 48 | " | 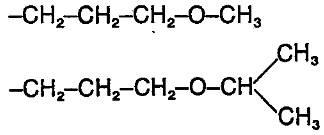 | $-SO_2CH_3$ |
| 49 | 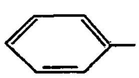 | $-CH_2-CH_2-O-$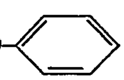 | $-CN$ |
| 50 | " | $-(CH_2)_3-O-CH_2-CH_2-O-$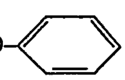 | $-CN$ |
| 51 | " | $-CH_2-CH_2-OH$ | $-CH$ |
| 52 | " | 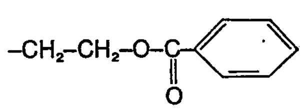 | $-CN$ |
| 53 | " | 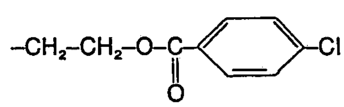 | $-CN$ |
| 54 | " | $-CH_2-CH_3$ | $-SO_2CH_3$ |
| 55 | " | $-CH_2-CH_2-CH_2-CH_3$ | $-SO_2CH_3$ |

| Beispiel | $R_1$ | $R_2$ | X |
|---|---|---|---|
| 56 | 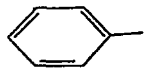 | $-CH_3$ | $-SO_2CH_3$ |
| 57 | " | $-CH_2-CH_3$ | $-SO_2CH_3$ |
| 58 | " | $-CH_2-CH_2-CH_3$ | $-SO_2CH_3$ |
| 59 | " | $-CH_2-CH_2-CH_2-CH_3$ | $-SO_2CH_3$ |
| 60 | " | $-CH_2-CH_2-CH_2-CH_2-CH_3$ | $-SO_2CH_3$ |
| 61 | " | 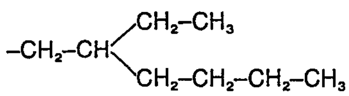 | $-SO_2CH_3$ |
| 62 | " | 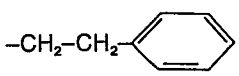 | $-SO_2CH_3$ |
| 63 | " | $-CH_2-CH_2-CH_2-O-CH_3$ | $-SO_2CH_3$ |
| 64 | " | 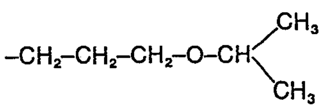 | $-SO_2CH_3$ |
| 65 | 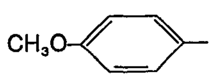 | 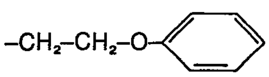 | $-CN$ |
| 66 | " | 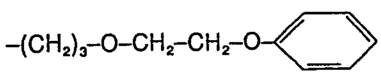 | $-CN$ |
| 67 | " | $-CH_2-CH_2-CH_2-OH$ | $-CN$ |
| 68 | " | 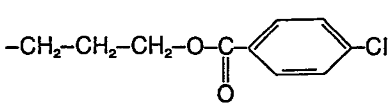 | $-CN$ |
| 69 | " | 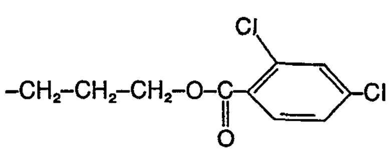 | $-CN$ |
| 70 | " | 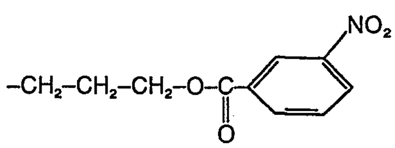 | $-CN$ |
| 71 | " | $-CH_2CH_3$ | $-SO_2CH_3$ |
| 72 | " | $-CH_2-CH_2-CH_2-CH_3$ | $-SO_2CH_3$ |

Beispiel 73:

1 T des gemäss Beispiel 1 erhaltenen Farbstoffes wird mit 2 T einer 50%igen wässerigen Lösung des Natriumsalzes der Dinaphthylmethandisulfonsäure nass vermahlen und getrocknet.

Dieses Farbstoffpräparat wird mit 40 T einer 10%igen wässerigen Lösung des Natriumsalzes der N-Benzylheptadecyl-benzimidazoldisulfonsäure verrührt und 4 T einer 40%igen Essigsäurelösung zugegeben. Durch Verdünnen mit Wasser wird daraus ein Färbebad von 4000 T bereitet.

In dieses Bad geht man bei 50° mit 100 T eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine kräftige grünstichig gelbe Färbung.

Beispiel 74:

2 T des gemäss Beispiel 1 erhaltenen Farbstoffes werden in 4000 T Wasser dispergiert. Zu dieser Dispersion gibt man 12 T des Natriumsalzes von o-Phenylphenol sowie 12 T Diammoniumphosphat und färbt 100 T Garn aus Polyäthylenglykolterephthalat 90 Minuten lang bei 95 bis 98° in dieser Flotte.

Das gefärbte Material wird anschliessend gespült und mit wässeriger Natronlauge und einem Dispergator nachbehandelt. Man erhält so eine grünstichig gelbe Färbung.

Beispiel 75:
Polyäthylenglykolterephthalatgewebe wird auf einem Foulard bei 40° mit einer Flotte folgender Zusammensetzung imprägniert:

20 T des gemäss Beispiel 1 erhaltenen Farbstoffes fein dispergiert in
10 T Natriumalginat
20 T Triäthanolamin
20 T Octylphenolpolyglykoläther und
930 T Wasser.

Das auf ca. 100% abgequetschte Gewebe wird bei 100° getrocknet und anschliessend während 30 Sekunden bei einer Temperatur von 210° fixiert. Die gefärbte Ware wird mit Wasser gespült, geseift und getrocknet. Man erhält eine grünstichig gelbe Färbung.

**Patentansprüche**

1. Azoverbindungen der Formel I

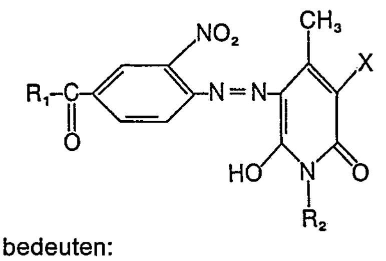

(I)

worin bedeuten:
$R_1$ einen gegebenenfalls substituierten Phenylrest,
X CN oder die $SO_2$-Alkyl($C_1$–$C_4$)-Gruppe, und
$R_2$ einen gegebenenfalls substituierten Alkyl($C_1$–$C_8$)rest.

2. Azoverbindungen gemäss Anspruch 1, dadurch gekennzeichnet, dass bedeuten:
$R_1$ die unsubstituierte Phenylgruppe oder die durch $CH_3$, Cl oder $OCH_3$ substituierte Phenylgruppe, X CN oder $SO_2CH_3$ und $R_2$ eine unsubstituierte, unverzweigte oder verzweigte $C_1$–$C_8$-Alkylgruppe oder eine unverzweigte oder verzweigte $C_2$–$C_3$-Alkylgruppe welche substituiert ist durch Phenyl, OH, $OCH_3$, $OC_3H_7$, Phenoxy,

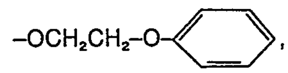, $OCOCH_3$ oder

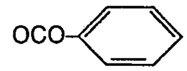

worin der Phenylrest gegebenenfalls ein- oder mehrmals durch Cl oder $NO_2$ substituiert sein kann.

3. Azoverbindungen gemäss Anspruch 2, dadurch gekennzeichnet, dass bedeuten:
$R_1$ die unsubstituierte Phenylgruppe oder die durch $CH_3$, Cl oder $OCH_3$ substituierte Phenylgruppe, X CN und $R_2$ eine unsubstituierte, unverzweigte oder verzweigte $C_1$–$C_8$-Alkylgruppe.

4. Azoverbindungen gemäss Anspruch 1, dadurch gekennzeichnet, dass $R_1$ einen substituierten Phenylrest darstellt.

5. Azoverbindungen gemäss Anspruch 1, dadurch gekennzeichnet, dass $R_1$ einen durch Halogen oder einen $C_1$–$C_4$-Alkylrest substituierten Phenylrest darstellt.

6. Azoverbindungen gemäss Anspruch 1, dadurch gekennzeichnet, dass X die CN-Gruppe bedeutet.

7. Azoverbindungen gemäss Anspruch 1, dadurch gekennzeichnet, dass $R_2$ eine unsubstituierte, unverzweigte Alkylgruppe ($C_1$–$C_8$) darstellt.

8. Azoverbindungen gemäss Anspruch 7, dadurch gekennzeichnet, dass $R_2$ die n-Butylgruppe darstellt.

9. Azoverbindung gemäss Anspruch 1 der Formel

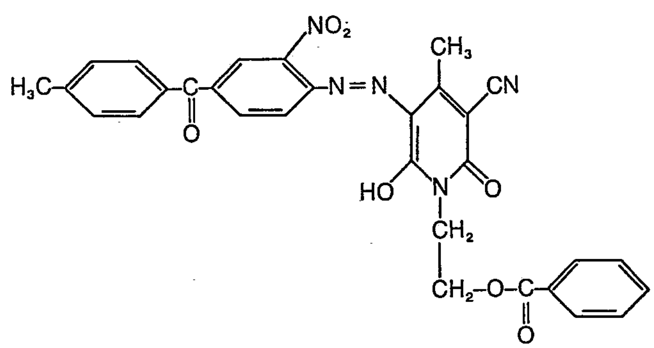

.

10. Azoverbindung gemäss Anspruch 1 der Formel

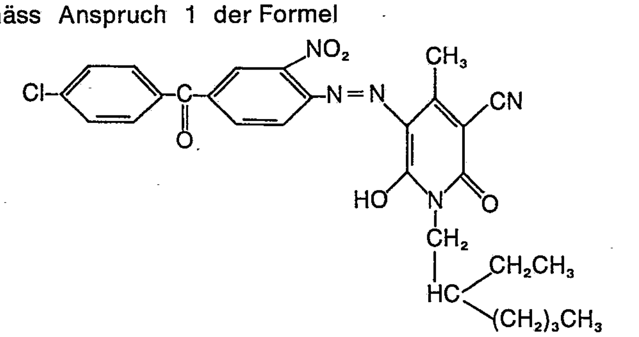

.

11. Azoverbindung gemäss Anspruch 1 der Formel

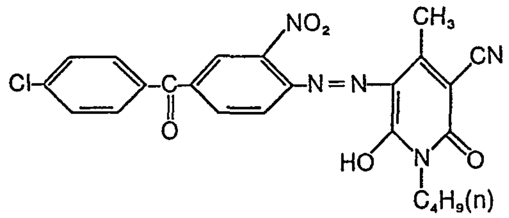

12. Azoverbindung gemäss Anspruch 1 der Formel

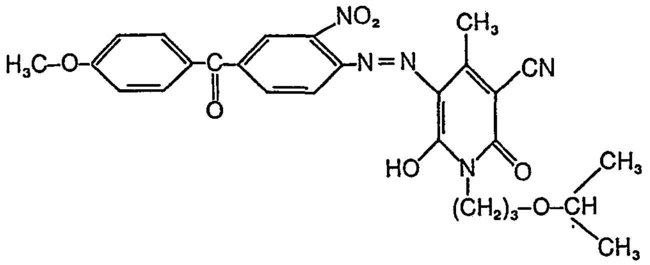

13. Azoverbindung gemäss Anspruch 1 der Formel

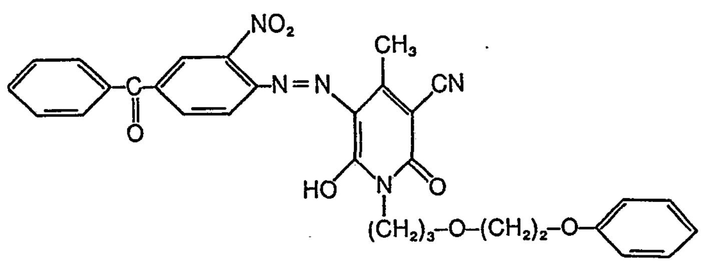

14. Verfahren zur Herstellung der Azoverbindungen der Formel I gemäss Anspruch 1, dadurch gekennzeichnet, dass man ein Amin der Formel II

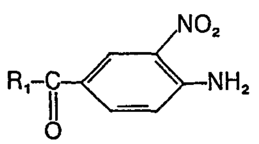 (II)

diazotiert und mit einer Kupplungskomponente der Formel III

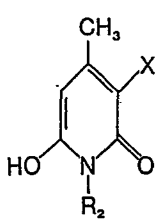 (III)

worin die Symbole $R_1$, X und $R_2$ die angegebene Bedeutung haben, kuppelt.

15. Verwendung der Azoverbindungen der Formel I gemäss Anspruch 1 oder der gemäss dem Verfahren des Anspruchs 14 erhaltenen Azoverbindungen als Farbstoffe zum Färben und Bedrucken von Textilmaterial, welches mit Dispersionsfarbstoffen anfärbbar ist.

16. Verwendung gemäss Anspruch 15 zum Färben und Bedrucken von Polyestermaterialien.

17. Das mit Azoverbindungen der Formel I behandelte Textilmaterial.

**Claims**

1. An azo compound of the formula I

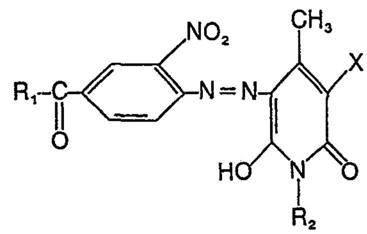 (I)

wherein

$R_1$ is an unsubstituted or substituted phenyl group,

X is CN or the $SO_2(C_1–C_4)$alkyl group, and

$R_2$ is an unsubstituted or substituted $C_1–C_8$-alkyl group.

2. An azo compound according to claim 1, wherein $R_1$ is phenyl or phenyl substituted by $CH_3$, Cl or $OCH_3$; X is CN or $SO_2CH_3$; and $R_2$ is an unsubstituted, straight or branched chain $C_1–C_8$-alkyl group, or a straight or branched chain $C_2–C_3$-

alkyl group which is substituted by phenyl, OH, $OCH_3$, $OC_3H_7$, phenoxy,

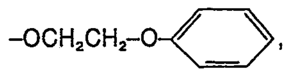, $OCOCH_3$ or 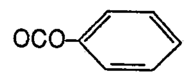

wherein the phenyl moiety may be substituted by one or more C1 atoms or one or more $NO_2$ groups.

3. An azo compound according to claim 2, wherein $R_1$ is phenyl or phenyl substituted by $CH_3$, Cl or $OCH_3$; X is CN; and $R_2$ is an unsubstituted, straight or branched chain $C_1$–$C_8$alkyl group.

4. An azo compound according to claim 1, wherein $R_1$ is a substituted phenyl group.

5. An azo compound according to claim 1, wherein $R_1$ is a phenyl group substituted by halogen or by a $C_1$–$C_4$alkyl group.

6. An azo compound according to claim 1, wherein X is the CN group.

7. An azo compound according to claim 1, wherein $R_2$ is an unsubstituted, straight chain $C_1$–$C_8$alkyl group.

8. An azo compound according to claim 7, wherein $R_2$ is the n-butyl group.

9. An azo compound according to claim 1 of the formula

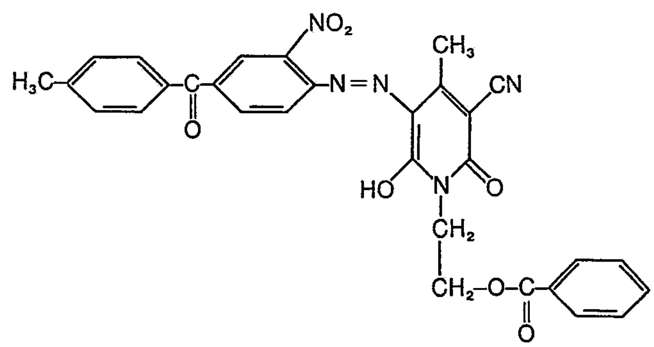

10. An azo compound according to claim 1 of the formula

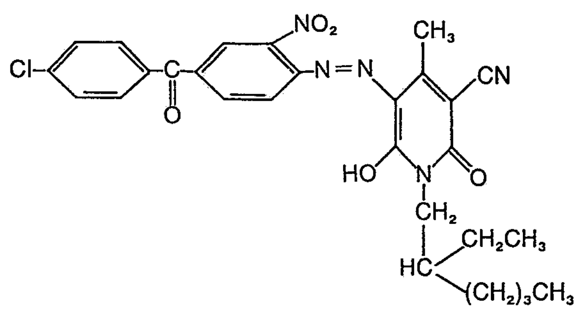

11. An azo compound according to claim 1 of the formula

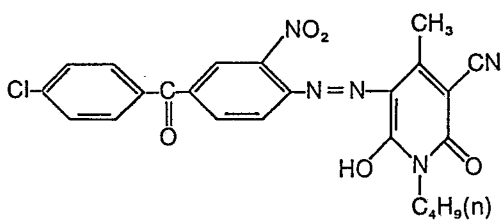

12. An azo compound according to claim 1 of the formula

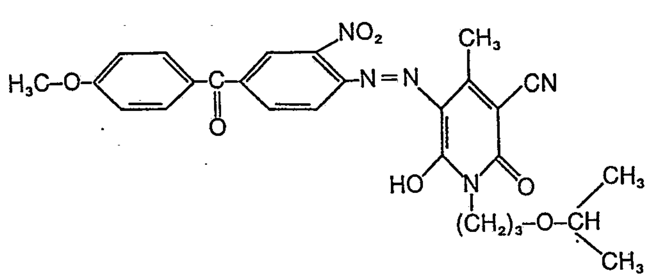

13. An azo compound according to claim 1 of the formula

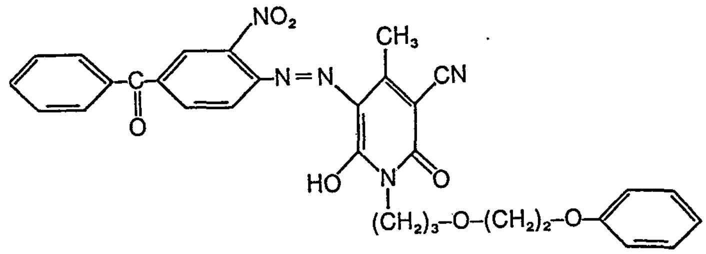

.

14. A process for the preparation of an azo compound of the formula I according to claim 1, which process comprises diazotising an amine of the formula II

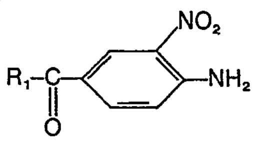

(II) ,

and coupling the diazo compound with a coupling component of the formula III

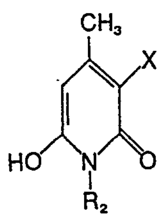

(III)

wherein the symbols $R_1$, X and $R_2$ have the given meanings.

15. Use of an azo compound of the formula I according to claim 1, or of an azo compound obtained by the process of claim 14, for dyeing or printing textile material which is dyeable with disperse dyes.

16. Use according to claim 15 for dyeing or printing polyester material.

17. The textile material treated with an azo compound of the formula I.

**Revendications**

1. Composés azoïques de formule I:

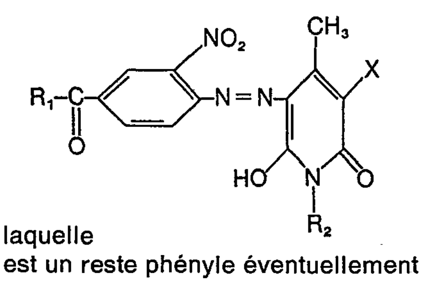

(I)

dans laquelle

$R_1$ est un reste phényle éventuellement substitué,

X représente CN ou le groupe $SO_2$-alkyle ($C_1$–$C_4$) et

$R_2$ est un reste alkyle en $C_1$–$C_8$ éventuellement substitué.

2. Composés azoïques selon la revendication 1, caractérisés par le fait que $R_1$ désigne le groupe phényle non substitué ou le groupe phényle substitué par $CH_3$, Cl ou $OCH_3$; X est CN ou $SO_2CH_3$, et $R_2$ est un groupe alkyle en $C_1$–$C_8$ non-substitué, non-ramifié ou ramifié, ou bien un groupe alkyle en $C_2$–$C_3$ non-ramifié ou ramifié qui est substitué par un reste phényle; OH, $OCH_3$, $OC_3H_7$, phénoxy,

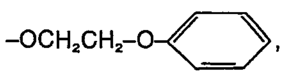

, $OCOCH_3$ ,

ou

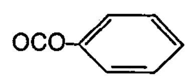

dans lesquels le reste phényle peut être éventuellement substitué une ou plusieurs fois par Cl ou $NO_2$.

3. Composés azoïques selon la revendication 2, caractérisés par le fait que $R_1$ désigne le groupe phényle non-substitué ou le groupe phényle substitué par $CH_3$, Cl ou $OCH_3$; X est CN, et $R_2$ est un groupe alkyle en $C_1$–$C_8$ non-substitué, non-ramifié ou ramifié.

4. Composés azoïques selon la revendication 1, caractérisés par le fait que $R_1$ est un reste phényle substitué.

5. Composés azoïques selon la revendication 1, caractérisés par le fait que $R_1$ représente un reste phényle substitué par un halogène ou un groupe alkyle en $C_1$–$C_4$.

6. Composés azoïques selon la revendication 1, caractérisés par le fait que X est le groupe CN.

7. Composés azoïques selon la revendication 1, caractérisés par le fait que $R_2$ représente un groupe alkyle en $C_1$–$C_8$ linéaire, non-substitué.

8. Composés azoïques selon la revendication 7, caractérisés par le fait que $R_2$ représente le groupe n-butyle.

9. Composé azoïque selon la revendication 1, ayant la formule:

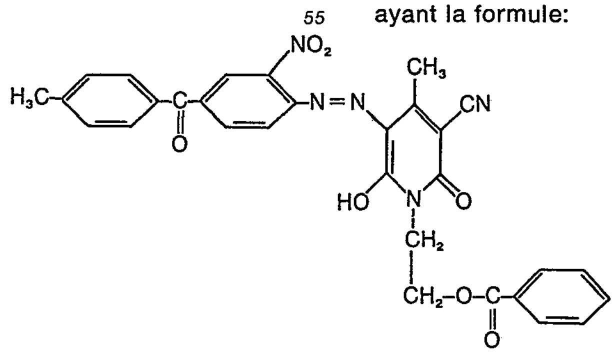

10. Composé azoïque selon la revendication 1, ayant la formule:

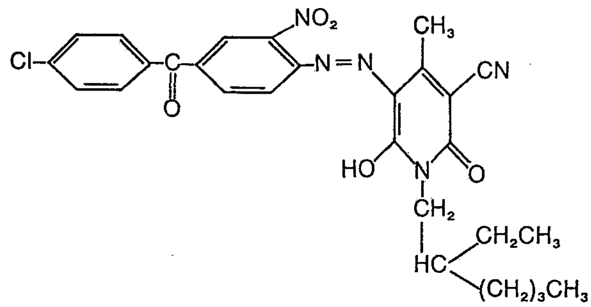

11. Composé azoïque selon la revendication 1, ayant la formule:

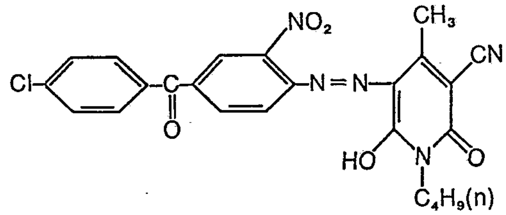

12. Composé azoïque selon la revendication 1, ayant la formule:

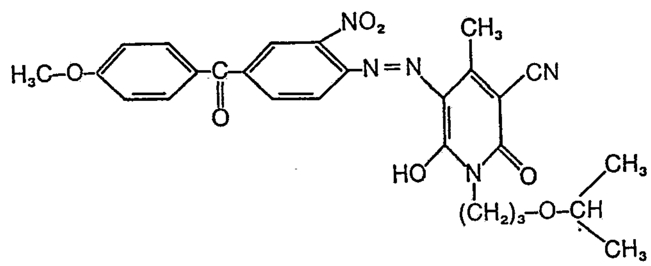

13. Composé azoïque selon la revendication 1, ayant la formule:

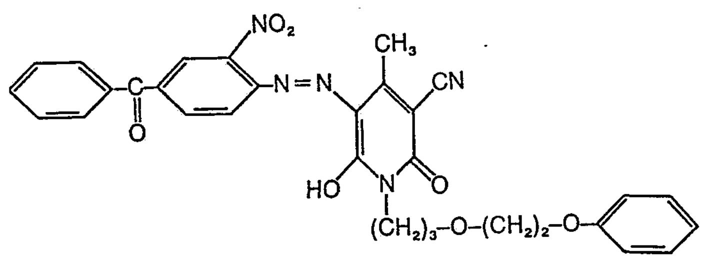

14. Procédé pour la préparation des composés azoïques de formule I selon la revendication 1, caractérisé par le fait qu'on diazote une amine de formule II:

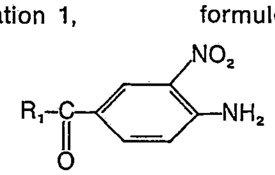 (II)

et qu'on copule avec un copulant de formule III:

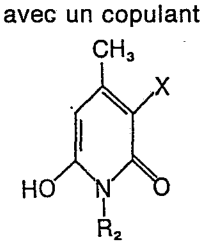 (III)

dans lesquelles les symboles $R_1$, X et $R_2$ ont les définitions données.

15. Utilisation des composés azoïques de formule I selon la revendication 1, ou des composés azoïques obtenus selon le procédé de la revendication 14, comme colorants pour teindre et imprimer des matières textiles qui sont teignables avec des colorants dispersées.

16. Utilisation selon la revendication 15 pour teindre et imprimer des matières en polyester.

17. La matière textile traitée avec les composés azoïques de formule I.